# EUROPÄISCHE PATENTSCHRIFT

(11) **EP 3 697 597 B1**
(45) Veröffentlichungstag und Bekanntmachung des Hinweises auf die Patenterteilung: **22.06.2022**
(21) Anmeldenummer: 18788707.0
(22) Anmeldetag: 10.10.2018
(51) Int. Cl.: B29C 64/307, B22F 3/105

(54) **HUBEINRICHTUNG FÜR EINEN BAUZYLINDER IN EINER MASCHINE, MASCHINE ZUR HERSTELLUNG VON DREIDIMENSIONALEN BAUTEILEN MIT EINER HUBEINRICHTUNG SOWIE VERFAHREN ZUR ANSTEUERUNG DER HUBEINRICHTUNG**
LIFTING DEVICE FOR A CONSTRUCTION CYLINDER IN A MACHINE, MACHINE FOR PRODUCING THREE DIMENSIONAL COMPONENTS WITH A LIFTING DEVICE AND METHOD FOR CONTROLLING THE LIFTING DEVICE
DISPOSITIF DE LEVAGE POUR UN CYLINDRE DE CONSTRUCTION DANS UNE MACHINE, MACHINE POUR PRODUIRE DES COMPOSANTS TRIDIMENSIONNELS AVEC UN DISPOSITIF DE LEVAGE ET PROCÉDÉ DE COMMANDE DU DISPOSITIF DE LEVAGE

(30) Priorität: 19.10.2017 DE 102017124424
(43) Veröffentlichungstag der Anmeldung: 26.08.2020
(73) Patentinhaber: TRUMPF Laser- und Systemtechnik GmbH, 71254 Ditzingen (DE)
(72) Erfinder: PIEGER, Markus, 73240 Wendlingen am Neckar (DE); GEISLER, Tim, 74336 Brackenheim (DE)
(74) Vertreter: Patentanwälte Mammel und Maser PartG mbB
(86) Internationale Anmeldenummer: PCT/EP2018/077637
(87) Internationale Veröffentlichungsnummer: WO 2019/076705

(56) Entgegenhaltungen:
- WO-A1-00/21736
- WO-A1-02/26420
- WO-A1-2016/207258
- DE-A1-102015 000 003

## Beschreibung

Die Erfindung betrifft eine Hubeinrichtung für einen Bauzylinder in einer Maschine zum schichtweisen Aufbringen und selektiven Verfestigen eines pulverförmigen Aufbaumaterials zur Herstellung eines dreidimensionalen Bauteils sowie eine Maschine zum Herstellen solcher dreidimensionalen Bauteile mit einer solchen Hubeinrichtung als auch ein Verfahren zur Ansteuerung der Hubeinrichtung zum Be- und Entladen und Betrieb eines Bauzylinders in einer solchen Maschine.

Aus der DE 103 42 882 A1 sind eine Maschine sowie ein Verfahren zur Herstellung eines dreidimensionalen Bauteils in einem Bauzylinder durch schichtweises Aufbringen und selektives Verfestigen eines pulverförmigen Aufbaumaterials bekannt. Diese Maschine umfasst eine Prozesskammer, welche in einer horizontalen Ebene eine Arbeitsfläche aufweist, der ein fest daran angeordneter Bauzylinder zugeordnet ist. Oberhalb der Arbeitsfläche ist eine Auftrags- und Nivelliereinrichtung verfahrbar vorgesehen, durch welche ein Aufbaumaterial aus einer Vorratskammer dem Bauzylinder zugeführt und überschüssiges Aufbaumaterial in einen Auffangbehälter abgeführt wird. Dieser Prozesskammer ist eine Strahlquelle, insbesondere Laserquelle, zugeordnet sowie eine optische Einrichtung, wie beispielsweise ein Scanner, um einen Bearbeitungsstrahl der Strahlquelle selektiv auf das pulverförmige Aufbaumaterial in dem Bauzylinder zu richten, um ein selektives Verfestigen zur Bildung eines dreidimensionalen Bauteils zu schaffen.

In dem Bauzylinder ist eine auf und ab bewegbare Substratplatte vorgesehen, auf welcher das dreidimensionale Bauteil aufgebaut wird. Durch schrittweises Absenken der Substratplatte im Bauzylinder entsprechend der gebildeten Schicht wird das dreidimensionale Bauteil nach und nach hergestellt. Zur auf und ab Bewegung dieser Substratplatte ist ein Hubzylinder vorgesehen, der einen Bauraum benötigt, welcher dem Hubweg der Bauplattform in dem Bauzylinder entspricht.

Aus der WO 00/21736 A1 ist eine Laser-Sintermaschine mit einem Maschinengehäuse bekannt, in welchem ein Bauraum untergebracht ist. In dem Bauraum ist ein Wechselbehälter positioniert. Eine im Wechselbehälter auf und ab bewegbare Werkstückplattform wird mit einem Tragarm einer Trägervorrichtung entlang einer Führungsvorrichtung im Bereich der Maschinengehäuserückseite auf und ab bewegt.

Des Weiteren ist eine solche Maschine bekannt, bei welcher der Bauzylinder auswechselbar zur Arbeitsfläche in einer Prozesskammer vorgesehen ist. Der Bauzylinder wird gegenüber der Arbeitsfläche nach unten abgesenkt, sodass dieser darauffolgend mit einem Arbeitshilfsmittel entnommen werden kann. Ein hierfür vorgesehener Hubzylinder weist einen erhöhten Bauraum beziehungsweise eine Bauhöhe auf, da dieser sowohl die Hubbewegung der Substratplatte innerhalb des Bauzylinders während der Herstellung des dreidimensionalen Betriebs durchführt als auch die auf und ab Bewegung des Bauzylinders zwischen einer Be- und Entladeposition zur Arbeitsposition an der Arbeitsfläche durchführt.

Der Erfindung liegt die Aufgabe zugrunde, eine Hubeinrichtung sowie eine Maschine mit einer solchen Hubeinrichtung als auch ein Verfahren zur Ansteuerung der Hubeinrichtung als auch zum Betrieb des Bauzylinders zum Be- und Entladen der Maschine mit einem Bauzylinder zu schaffen, welche eine geringe Bauhöhe aufweist.

Diese Aufgabe wird durch eine Hubeinrichtung für einen Bauzylinder in einer Maschine zum schichtweisen Aufbringen und selektiven Verfestigen eines pulverförmigen Aufbaumaterials zur Herstellung eines dreidimensionalen Bauteils geschaffen, welche eine Antriebseinheit mit einem ersten Führungskörper und zumindest einem zweiten Führungskörper umfasst, die entlang zumindest einer Führung mit zumindest einer Antriebseinrichtung aufeinanderfolgend verfahrbar sind, sodass eine erste Konsole an dem ersten Führungskörper, die den Bauzylinder aufnimmt, nacheinander beziehungsweise aufeinanderfolgend zu einer zweiten Konsole an dem zumindest einen weiteren Führungskörper verfahren wird, an der ein Hauptantrieb für die Ansteuerung einer Verfahrbewegung der Substratplatte im Bauzylinder vorgesehen ist. Durch diese Antriebseinrichtung und dem zumindest einen Führungskörper an der zumindest einen Führung ist ein geschachteltes Antriebssystem geschaffen, wodurch die Hubbewegungen für die auf und ab Bewegung des Bauzylinders zwischen einer Be- und Entladeposition und einer Arbeitsposition an einer Arbeitsfläche einerseits und die auf und ab Bewegung der Substratplatte innerhalb des Bauzylinders andererseits ermöglicht. Dadurch kann eine Verringerung in der gesamten Bauhöhe der Hubeinrichtung erzielt werden. Um die erforderlichen Hubbewegungen durchzuführen, wird der erste und zumindest eine weitere Führungskörper mit einer raupenförmigen Verfahrbewegung angesteuert, das heißt, dass zunächst der erste Führungskörper mit einer Verfahrbewegung angesteuert wird und der zumindest eine weitere Führungskörper stillgesetzt beziehungsweise zur zumindest einen Führung fixiert gehalten ist. Nach Durchführung der Hubbewegung erfolgt ein Wechsel, sodass der bewegte Führungskörper stillgesetzt und der nicht bewegte Führungskörperverfahren wird. Darauffolgend erfolgt wieder ein Wechsel in der Ansteuerung der Führungskörper für die darauffolgende Verfahrbewegung.

Bevorzugt sind lineare Führungskörper vorgesehen. Diese ermöglichen eine exakte Verfahrbewegung, die auch überwacht werden kann. Bevorzugt sind einstufig lineare Führungskörper vorgesehen. Dies ermöglicht den Einsatz kostengünstiger Führungskörper. Zudem ist eine Redundanz in den Antrieb gegeben, wodurch diese Hubeinrichtung kosteneinsparend ausgebildet sein kann.

Eine weitere bevorzugte Ausgestaltung der Hubeinrichtung sieht vor, dass der erste und zumindest eine weitere Führungskörper jeweils zumindest einen Schlitten aufweisen, die entlang der zumindest einen Führung verfahrbar sind und dass die zumindest eine Antriebseinrichtung an den Schlitten oder an den Konsolen der Führungskörper angreift. Dadurch kann in einfacher Weise die Raupenbewegung angesteuert werden, wobei eine hohe Präzision in der Verfahrbewegung gegeben ist, da die linearen Führungskörper an der zumindest einen Führung entlang verfahren werden.

Bevorzugt umfasst jeder Führungskörper eine separat ansteuerbare Bremseinrichtung. Dies vereinfacht die Ansteuerung der Verfahrbewegung.

Jeder Führungskörper weist bevorzugt eine Weg-/Messeinrichtung oder einen Lageerkundungssensor auf, die vorzugsweise als Bezugssystem die zumindest eine Führung aufweisen. Dadurch kann ergänzend zu der angesteuerten Verfahrbewegung die Position des jeweiligen Führungskörpers abgefragt und überwacht werden, wodurch die Prozesssicherheit erhöht werden kann.

Eine weitere vorteilhafte Ausgestaltung der Hubeinrichtung sieht vor, dass der den Bauzylinder mittels der Konsole aufnehmende Führungskörper synchron mit der Verfahrbewegung des Kolbens mit dem an der weiteren Konsole des weiteren Führungskörpers angeordneten Hauptantriebes ansteuerbar ist. Dadurch kann beispielsweise nach dem Beladen der ersten Konsole mit einem Bauzylinder und einem Ankoppeln eines Kolbens an der Substratplatte des Bauzylinders die Position der Substratplatte innerhalb des Bauzylinders aus der Beladeposition beibehalten werden, insbesondere während der Verfahrbewegung des Bauzylinders in die Arbeitsposition.

Zur Ansteuerung einer Verfahrbewegung der Hubeinrichtung ist bevorzugt eine Steuerungseinrichtung vorgesehen, welche die Bremseinrichtungen und die zumindest eine Antriebseinrichtung, welche die Hubbewegung der Führungskörper ansteuert, einzeln ansteuert, sodass die Antriebseinrichtung für eine Verfahrbewegung von zumindest einem Führungskörper nur dann ansteuerbar ist, sofern die Bremseinrichtung von einem der weiteren Führungskörper geschlossen ist. Dadurch wird eine kontrollierte und aufeinanderfolgende Verfahrbewegung der Führungskörper ermöglicht. Durch einen Wechsel bei der Ansteuerung der Bremseinrichtung des weiteren Führungskörpers zu dem ersten Führungskörper kann dadurch die Raupenbewegung angesteuert werden.

Der erste und zumindest eine weitere Führungskörper sind bevorzugt an einer gemeinsamen Führung vorgesehen. Diese gemeinsame Führung kann eine, zwei oder mehrere parallele Führungsschienen aufweisen. Auch können nicht-parallele Führungsschienen vorgesehen sein, die mit den Führungskörpern zu einer parallel ausgerichteten Hubbewegung führen.

Der an der weiteren Konsole des zumindest einen Führungskörpers vorgesehene Hauptantrieb kann eine Hubbewegung des daran angeordneten Kolbens hochpräzise ansteuern, beispielsweise über eine Kugelumlaufspindel oder Teleskopkugelumlaufspindel.

Die der Erfindung zugrundeliegende Aufgabe wird des Weiteren durch eine Maschine zur Herstellung eines dreidimensionalen Bauteils durch selektives Verfestigen eines schichtweise aufgebrachten Aufbaumaterials mittels eines auf das Aufbaumaterial einwirkenden Strahls gelöst, welcher eine Hubeinrichtung mit einer Antriebseinheit aufweist, welche einen ersten Führungskörper und zumindest einen zweiten Führungskörper umfasst, die entlang zumindest einer Führung mit zumindest einer Antriebseinrichtung aufeinanderfolgend verfahrbar ist, wobei der erste Führungskörper eine erste Konsole aufnimmt, auf welcher ein Bauzylinder anordenbar ist und der zumindest eine weitere Führungskörper eine weitere Konsole aufnimmt, auf welcher ein Hauptantrieb zur Ansteuerung der Substratplatte im Bauzylinder vorgesehen ist. Durch eine solche geschachtelte Anordnung der Hubeinrichtung kann eine verringerte Bauhöhe geschaffen werden und dennoch ein Wechsel eines Bauzylinders, der ebenfalls eine Hubbewegung benötigt, ermöglicht sein. Dadurch kann die Arbeitsfläche in der Prozesskammer auf einer Höhe vorgesehen sein, sodass ein Werker ohne zusätzliche Hilfsmittel Einsicht in die Prozesskammer zur Überwachung nehmen kann.

Des Weiteren ist die zumindest eine, insbesondere eine gemeinsame, Führung der Führungskörper vertikal ausgerichtet und an einem Grundgestell der Maschine vorgesehen. Dadurch kann eine präzise Anbindung des Bauzylinders an die Arbeitsfläche ermöglicht sein. Die Hubeinrichtung umfasst bevorzugt lineare Führungskörper.

Die der Erfindung zugrundeliegende Aufgabe wird des Weiteren durch ein Verfahren zur Ansteuerung einer Hubeinrichtung für einen Wechsel oder einen Betrieb eines Bauzylinders in einer Maschine zur Herstellung von dreidimensionalen Bauteilen durch selektives Verfestigen eines schichtweise aufgebrachten Aufbaumaterials mittels eines auf das Aufbaumaterial einwirkende Strahles gelöst, bei dem ein erster Führungskörper und zumindest ein weiterer Führungskörper entlang zumindest einer Führung mit zumindest einer Antriebseinrichtung im Wechsel mit einer Hubbewegung angesteuert werden. Beispielsweise wird der erste Führungskörper stillgesetzt und der zumindest eine weitere Führungskörper mittels der zumindest einen Antriebseinrichtung verfahren, um eine erste Hubbewegung durchzuführen. Darauffolgend wird der zumindest eine weitere Führungskörper stillgesetzt und der erste Führungskörper mit einer Hubbewegung verfahren. Bevorzugt wird bei der ersten Hubbewegung der Abstand zwischen den zwei benachbarten Führungskörpern vergrößert, mit der nachfolgenden Hubbewegung der Abstand zwischen zwei Führungskörpern wieder verkleinert. Dadurch kann eine raupenförmige Bewegung angesteuert werden, wodurch mit einer ein geringes Bauvolumen aufweisenden Hubeinrichtung eine im Verhältnis dazu große Hubbewegung angesteuert und durchgeführt werden kann.

Bevorzugt wird nach jeder Hubbewegung des Führungskörpers eine Bremseinrichtung von einem der Führungskörper zur Sicherung der Hubposition angesteuert und geschlossen sowie die andere Bremseinrichtung für eine Hubbewegung des weiteren Führungskörpers gelöst. Dadurch ist sichergestellt, dass die Hubeinrichtung die zuletzt angefahrene Position zur gemeinsamen Führung beibehält und durch die Wechsel der aufeinanderfolgenden Hubbewegungen entlang der gesamten Verfahrstrecke der zumindest einen Führung verfahren werden kann.

Des Weiteren wird bevorzugt zum Beladen eines Bauzylinders eine an dem ersten Führungskörper vorgesehene Konsole in eine Beladeposition gegenüber der Antriebsposition abgesenkt, der Bauzylinder auf die erste Konsole aufgesetzt und darauffolgend eine erste Hubbewegung in Richtung auf die Arbeitsebene der Arbeitsfläche durchgeführt. Dadurch kann der Bauzylinder gegenüber einem Arbeitshilfsmittel gelöst werden, welches für das Be- und Entladen des Bauzylinders auf der ersten Konsole eingesetzt wird.

Des Weiteren wird ein Hauptantrieb mit einer Ausfahrbewegung des Kolbens angesteuert, wobei der Hauptantrieb an einer Konsole des zumindest einen weiteren Führungskörpers angeordnet ist und der Kolben mit einer Substratplatte im Bauzylinder verriegelt wird. Dadurch kann in einfacher Weise eine Kopplung des Kolbens von dem Hauptantrieb mit der Substratplatte im Bauzylinder geschaffen werden. Zudem kann durch die beibehaltene Position des ersten Führungskörpers eine Indexierung erfolgen, um daraufhin die weiteren Bewegungen der Führungskörper erfassen und überwachen zu können.

Des Weiteren wird bevorzugt der erste Führungskörper mit einer Hubbewegung zur Arbeitsebene angesteuert, bis dieser Bauzylinder mit der Arbeitsfläche auf einem Niveau ist, und synchron dazu wird der Hauptantrieb angesteuert, sodass die Substratplatte innerhalb des Bauzylinders die Position beim Ankoppeln mit dem Kolben beibehält. Dadurch wird der Bauzylinder in eine Arbeitsposition übergeführt. Die indexierte Position der Substratplatte zum Bauzylinder kann beibehalten werden.

Des Weiteren wird nach dem Überführen des Bauzylinders in die Arbeitsposition der erste Führungskörper stillgesetzt und der zumindest eine weitere Führungskörper in Richtung auf den ersten Führungskörper verfahren sowie der Hauptantrieb mit einer Ausgleichsbewegung angesteuert. Dadurch bleibt die Kolbenposition im Bauzylinder erhalten, und der zumindest eine weitere Führungskörper ist in eine relativ nahe Position der Arbeitsebene überführbar, sodass daraufhin die maximale Hubbewegung des Hauptantriebs für eine Verfahrbewegung der Substratplatte innerhalb des Bauzylinders zur Verfügung steht.

Des Weiteren ist bevorzugt vorgesehen, dass nach dem Überführen des Bauzylinders in die Arbeitsposition und der weiteren Hubbewegung des zumindest einen Führungskörpers die Bremseinrichtungen des ersten und zumindest einen weiteren Führungskörpers tätig werden, um darauffolgend die Herstellung des dreidimensionalen Bauteils zu beginnen. Dazu wird die Substratplatte in eine Startposition mit dem Hauptantrieb verfahren, die in der Auflageebene der Arbeitsfläche liegt. Darauffolgend erfolgt ein schrittweises Absenken der Substratplatte mittels des Hauptantriebes in Abhängigkeit der Dicke der aufgebrachten Schicht beim selektiven Verfestigen des Aufbaumaterials.

Die Erfindung sowie weitere vorteilhafte Ausführungsformen und Weiterbildungen derselben werden im Folgenden anhand der in den Zeichnungen dargestellten Beispiele näher beschrieben und erläutert. Die der Beschreibung und den Zeichnungen zu entnehmenden Merkmale können einzeln für sich oder zu mehreren in beliebiger Kombination erfindungsgemäß angewandt werden. Es zeigen:
- Figur 1: eine schematische Ansicht einer Maschine zur Herstellung von dreidimensionalen Bauteilen,
- Figur 2: eine perspektivische Ansicht einer Hubeinrichtung mit einem Bauzylinder,
- Figur 3: eine schematische Seitenansicht nach dem Beladen der Hubeinrichtung mit einem Bauzylinder,
- Figur 4: eine schematische Seitenansicht der Hubeinrichtung mit dem Bauzylinder in einer Arbeitsposition,
- Figur 5: eine schematische Seitenansicht der Hubeinrichtung mit einer Substratplatte in einer Zwischenposition,
- Figur 6: eine schematische Seitenansicht der Hubeinrichtung in einer Startposition für die Herstellung eines dreidimensionalen Bauteils,
- Figur 7: eine schematische Seitenansicht der Hubeinrichtung mit dem Bauzylinder in einer Entladeposition, und
- Figur 8: eine schematische Ansicht der Hubeinrichtung bei einer Entnahme des hergestellten Bauteils mit dem Bauzylinder in einer Arbeitsposition.

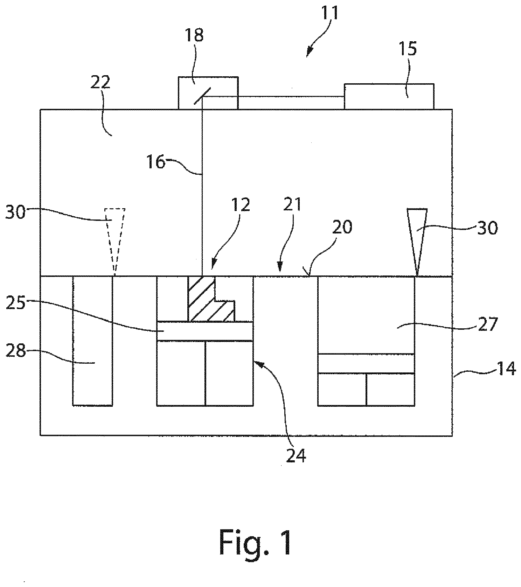

In Figur 1 ist eine schematische Ansicht einer Maschine 11 zur Herstellung eines dreidimensionalen Bauteiles 12 durch ein aufeinanderfolgendes Verfestigen von Schichten eines pulverförmigen Aufbaumaterials dargestellt. Diese Maschine 11 umfasst ein Maschinengestell 14 sowie eine an dem Maschinengestell 14 angeordnete Strahlquelle 15, beispielsweise in Form einer Laserquelle. Diese Strahlquelle 15 gibt einen Strahl 16 ab, der über eine Strahlablenkvorrichtung 18 auf eine Arbeitsebene 20 einer Arbeitsfläche 21 in einer Prozesskammer 22eingelenkt und geführt wird. Die Strahlablenkeinrichtung 18 kann in Form eines oder mehrerer ansteuerbarer Spiegel, insbesondere in Form eines Scanners, ausgebildet sein. Unterhalb der Arbeitsebene 20 ist ein Bauzylinder 24 mit einer Substratplatte 25 vorgesehen, welche innerhalb des Bauzylinders 24 verfahrbar ist, um darauf aufbauend das dreidimensionale Bauteil 12 zu schaffen. Benachbart zum Bauzylinder 24 ist eine Vorratskammer 27 vorgesehen, durch welche pulverförmiges Aufbaumaterial bereitgestellt wird. Dieser gegenüberliegend zum Bauzylinder 24 ist eine Auffangkammer 28 vorgesehen. Durch eine Auftrags- und Nivelliereinrichtung 30 wird pulverförmiges Aufbaumaterial, ausgehend von einer in Figur 1 dargestellten rechten Startposition dem Bauzylinder 24, zugeführt. Nicht benötigtes Aufbaumaterial wird mittels der Auftrags- und Nivelliereinrichtung 30 in die Auffangkammer 28 übergeführt (linke Endposition), sodass dieses wiederum aufbereitet und weiterverwendet werden kann.

Das Aufbaumaterial besteht bevorzugt aus einem Metall- oder Keramikpulver. Auch andere, für das Laserschmelzen und das Lasersintern geeignete und verwendete Werkstoffe können eingesetzt werden. Die Prozesskammer 22 ist bevorzugt hermetisch abgeriegelt. Diese wird für die Herstellung des dreidimensionalen Bauteiles 12 mit Schutzgas oder einem Inertgas gefüllt, um beim Aufschmelzen des Aufbaumaterials eine Oxidation zu vermeiden.

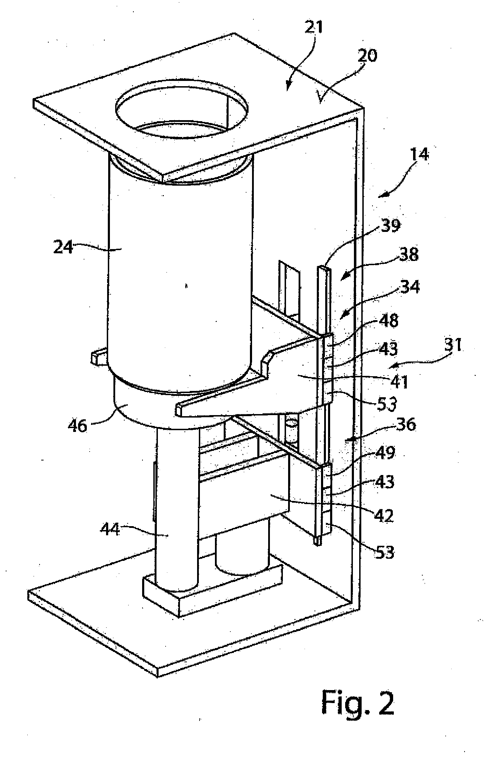

In Figur 2 ist eine perspektivische Ansicht einer Hubeinrichtung dargestellt, welche sowohl einen Wechsel des Bauzylinders 24 als auch die Ansteuerung einer Hubbewegung der Substratplatte 25 innerhalb des Bauzylinders 24 ermöglicht. Diese Hubeinrichtung umfasst einen ersten, vorzugsweise linearen, Führungskörper 34 sowie einen zweiten, vorzugsweise linearen, Führungskörper 36. Beide Führungskörper 34, 36 sind an zumindest einer Führung 38 vorgesehen. Im Ausführungsbeispiel ist bevorzugt eine gemeinsame Führung 38 vorgesehen, die an dem Maschinengrundgestell 14 fixiert ist. Diese gemeinsame Führung 38 kann eine oder mehrere parallel zueinander ausgerichtete Führungsschienen 39 umfassen, entlang welchen die Führungskörper 34, 36 verfahrbar sind. Der erste Führungskörper 34 nimmt eine Konsole 41 auf. Auf diese Konsole 41 kann der Bauzylinder 24 aufgesetzt und positioniert werden. Der zweite lineare Führungskörper 36 nimmt eine weitere Konsole 42 auf, auf welcher ein Hauptantrieb 44 positioniert ist. Dieser Hauptantrieb 44 steuert eine Verfahrbewegung eines Kolbens 46 an, welcher durch ein nicht näher dargestelltes Spannsystem mit der Substratplatte 25 verriegelbar ist. Der Kolben 46 umfasst bevorzugt zumindest eine Heizeinrichtung, um die Substratplatte 25 auf eine Arbeitstemperatur aufzuheizen. Diese kann beispielsweise in einem Bereich 500 °C liegen. Der Hauptantrieb 44 kann durch eine Kugelumlaufspindel, durch eine Trapezspindel oder dergleichen ausgebildet sein.

Der erste und zweite Führungskörper 34, 36 sind jeweils mit zumindest einem Schlitten 43 an der Führung 38 verfahrbar geführt. Die Führungskörper 34, 36 weisen jeweils eine Bremseinrichtung 48, 49 auf, durch welche eine Fixierung des jeweiligen linearen Führungskörpers 34, 36 in einer Position zur Führung 38 ermöglicht ist.

Zwischen dem ersten Führungskörper 34 und dem zweiten beziehungsweise weiteren Führungskörper 36 ist zumindest eine Antriebseinrichtung 51 vorgesehen, welche eine Verfahrbewegung der Führungskörper 34, 36 entlang der Führung 38 ansteuert. Diese Antriebseinrichtung 51 kann durch eine Trapezspindel oder Kugelumlaufspindel oder einen anderen stufenlos einstellbaren Linearantrieb erfolgen, die beispielsweise mit einem Elektromotor angetrieben wird. Bei dieser Antriebseinrichtung 51 handelt es sich um einen sogenannten Nebenantrieb, der preisgünstig im Vergleich zum Hauptantrieb 44 ausgestaltet sein kann. Der Hauptantrieb 44 ist präzise auszubilden, da eine schrittweise Verfahrbewegung der Substratplatte 25 mit geringem Hubweg während dem Herstellen des dreidimensionalen Bauteiles 12 erforderlich ist.

Der erste und zumindest eine weitere Führungskörper 34, 36 umfassen des Weiteren zumindest einen Lageerkennungssensor 53, wodurch die jeweilige Position des Führungskörpers 34, 36 zueinander und bezüglich der Höhe im Maschinengestell 14 beziehungsweise in der Lage zur Führung 38 erfassbar ist.

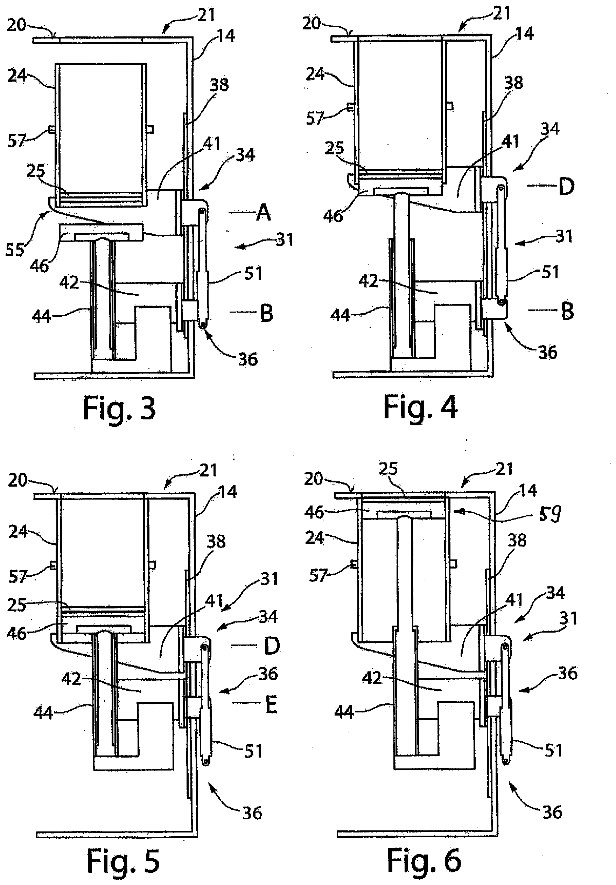

In Figur 3 ist eine schematische Seitenansicht der Hubeinrichtung dargestellt. Die Hubeinrichtung ist in einer Be- und Entladeposition 55 angeordnet. In dieser Be- und Entladeposition 55 ist der erste Führungskörper 34 in einer Position A. Der zweite Führungskörper 36 ist in einer untersten Position B. In der Position A ist die Konsole 41 des ersten Führungskörpers 34 derart gegenüber der Arbeitsebene 20 abgesenkt, dass der Bauzylinder 24 mit einem Arbeitshilfsmittel, beispielsweise mit einem Greifer, der ein Greifelement 57 am Bauzylinder 24 untergreift, geringfügig abgehoben und darauffolgend das Greifelement 57 entnommen werden kann. Gleiches gilt für das Einsetzen des Bauzylinders 24. Der Bauzylinder 24 wird auf die Konsole 41 aufgesetzt. Dabei kann die Konsole 41 eine Zentrieraufnahme aufweisen, um den Bauzylinder 24 in einer definierten Position auszurichten.

Darauffolgend erfolgt die Anbindung des Kolbens 46 an die Substratplatte 25 im Bauzylinder 24. Die Bremseinrichtungen 48, 49 des Führungskörpers 34, 36 sind geschlossen. Die Positionen A und B der Führungskörper 34, 36 bleiben beibehalten. Der Hauptantrieb 44 wird betätigt, wodurch der Kolben 46 ausgefahren wird. Sobald dieser zur Anlage an der Substratplatte 25 kommt, erfolgt ein Verriegeln über ein Spannsystem.

Nach dem Verbinden des Kolbens 46 mit der Substratplatte 25 kann die Bremseinrichtung 49 des weiteren Führungskörpers 36 gelöst werden, sodass dieser eine Hubbewegung durchführt und unmittelbar benachbart zum ersten Führungskörper 34 ist. Gleichzeitig wird eine Ausgleichsbewegung durch den Hauptantrieb 44 angesteuert, sodass der Kolben 46 in seiner Position zum Bauzylinder 24 verbleibt.

Nach dem Verbinden des Kolbens 46 mit der Substratplatte 25 kann auch die Bremseinrichtung 48 des ersten Führungskörper 34 gelöst und der Führungskörper 34 mit der Antriebseinrichtung 51 in eine Arbeitsposition übergeführt werden. In dieser Arbeitsposition schließt der Bauzylinder 24 mit seinem oberen Öffnungsrand an die Arbeitsfläche 21 an. Die obere Öffnung des Bauzylinders 24 liegt in der Arbeitsebene 20. Dies ist in Figur 4 dargestellt. Aufgrund der Verbindung des Kolbens 46 mit der Substratplatte 25 ist während dem Überführen des Bauzylinders 24 in die Arbeitsposition eine synchrone Ausgleichsbewegung durch den Hauptantrieb 44 erforderlich, das heißt, dass der Kolben 46 ausgefahren wird, um beispielsweise die untere Position der Substratplatte 25 während der Verfahrbewegung des Bauzylinders 24 beizubehalten.

In dieser Arbeitsposition gemäß Figur 4 wird die Bremseinrichtung 48 des Führungskörpers 34 geschlossen und die Bremseinrichtung 49 des Führungskörpers 36 geöffnet. Darauffolgend wird der Führungskörper 36 mit der Antriebseinrichtung 51 in eine Position D verfahren, wie es in Figur 5 dargestellt ist, sodass die Führungskörper 34, 36 nahe beieinander positioniert sind. Anschließend wird die Bremseinrichtung 49 ebenfalls geschlossen. Nunmehr kann die gesamte Hubbewegung des Hauptantriebes 44 zur Ansteuerung einer Hubbewegung der Substratplatte 25 zur Verfügung stehen.

Alternativ zur vorbeschriebenen Abfolge der Arbeitsschritte zur Positionierung des Bauzylinders 24 zur Arbeitsebene 20 und zur Verbindung des Kolbens 46 mit der Substratplatte 25 kann auch folgender Ablauf ausgehend von Figur 3 vorgesehen sein: Zunächst wird der Bauzylinder 24 mittels dem ersten Führungskörper 34 in eine Arbeitsposition übergeführt, in der der Bauzylinder 24 mit seinem oberen Öffnungsrand an die Arbeitsfläche 21 anschließt. Darauffolgend wird der erste Führungskörper 34 stillgesetzt beziehungsweise diese Position fixiert. Anschließend wird der weitere Führungskörper 36 mit einer Hubbewegung beaufschlagt, sodass der Kolben 46 an die Substratplatte 25 herangeführt wird. Die Substratplatte 25 und der Kolben 46 werden miteinander gekoppelt. Der weitere Führungskörper 36 wird stillgesetzt und die Bremseinrichtung 49 fixiert. Durch diese alternative Verfahrensweise wird ebenfalls die in Figur 5 dargestellte Position des Bauzylinders 24 zur Arbeitsfläche 21 sowie die Position des ersten und weiteren Führungskörper 34, 36 der Hubeinrichtung 51 gemäß der Darstellung in Figur 5 eingenommen.

Durch eine Ausfahrbewegung des Hauptantriebes 44 wird die Substratplatte 25 in eine Startposition 59 für die Herstellung des dreidimensionalen Bauteiles 12 übergeführt. Dies ist in Figur 6 dargestellt. Ausgehend von dieser Startposition 59 erfolgt die Herstellung des dreidimensionalen Bauteiles 12 durch selektives Verfestigen des Aufbaumaterials. Die Substratplatte 25 wird dabei durch den Hauptantrieb 44 schrittweise nach unten, also in den Bauzylinder 24, hinein bewegt, sobald eine Schicht auf dem Bauteil 12 verfestigt wurde. Die Verfahrbewegung umfasst bevorzugt einen Hub, welcher der aufgebrachten Schicht entspricht.

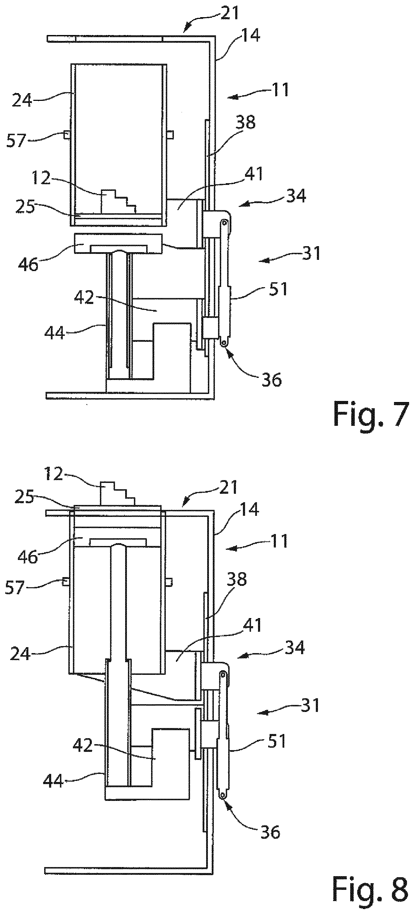

Am Ende des Herstellungsprozesses kann die Ansteuerung der Führungskörper 34, 36 in umgekehrter Reihenfolge, wie dies in den Figuren 3 bis 6 beschrieben ist, erfolgen, bis die Positionen in Figur 7 eingenommen sind. Die Substratplatte 25 ist in einer unteren Endposition zum Bauzylinder 24 durch den Hauptantrieb 44 positioniert. Darauffolgend wird das Spannsystem gelöst, sodass der Kolben 46 von der Substratplatte 25 freikommt. Anschließend kann der Bauzylinder 24 entnommen werden kann.

In Figur 8 ist beispielhaft eine Anordnung der Substratplatte 25 im Bauzylinder 24 dargestellt, bei der das dreidimensionale Bauteil 12 unmittelbar von der Substratplatte 25 entnommen oder die Substratplatte 25 aus dem Bauzylinder 24 entnommen wird.

Durch die Anordnung der zumindest zwei linearen Führungskörper 34, 36 entlang einer gemeinsamen Führung, welche durch die Antriebseinrichtung 51 angetrieben werden und die Anordnung des Hauptantriebes 44 an einem der beiden Führungskörper 34, 36 kann ein verschachteltes Antriebssystem geschaffen werden, um die Hubeinrichtung mit einem geringen Bauvolumen auszubilden und einen großen Gesamthub zu ermöglichen. Durch die ansteuerbare raupenförmige Verfahrbewegung des ersten und weiteren Führungskörper 34, 36 wird der Hauptantrieb 44 entlang der Führung 38 mit bewegt, sodass dessen Hublänge im Wesentlichen durch die Höhe des Bauzylinders 24 bestimmt ist. Die weiteren erforderlichen Hubwege werden durch den ersten und zweiten Führungskörper 34, 36 ausgeglichen.

## Patentansprüche

1. Hubeinrichtung für einen Bauzylinder (24) in einer Maschine (11) zur Herstellung eines dreidimensionalen Bauteils (12) durch selektives Verfestigen eines schichtweise aufgebrachten Aufbaumaterials mittels eines auf das Aufbaumaterial einwirkenden Strahls (16),
- mit einer ersten Konsole (41), welche den Bauzylinder (24) auswechselbar aufnimmt,
- mit einem ersten Führungskörper (34), welcher die Konsole (41) verfahrbar ansteuert und den Bauzylinder (24) in eine Arbeitsebene (20) einer Arbeitsfläche (21) in einer Prozesskammer (22) verfährt,
- mit einem Hauptantrieb (44), der einen Kolben (46), welcher mit einer Substratplatte (25) des Bauzylinders (24) koppelbar ist, mit einer Hubbewegung ansteuert,
**dadurch gekennzeichnet,**
- **dass** dem ersten Führungskörper (34) zumindest ein weiterer Führungskörper (36) zuordnet ist, der an zumindest einer Führung (38) verfahrbar sind,
- **dass** der zumindest eine weitere Führungskörper (36) eine Konsole (42) aufweist, an der der Hauptantrieb (44) vorgesehen ist und
- **dass** der erste und zumindest eine weitere Führungskörper (34, 36) mit zumindest einer Antriebseinrichtung (51) aufeinanderfolgend entlang der zumindest einen Führung (38) verfahrbar sind.

2. Hubeinrichtung nach Anspruch 1, **dadurch gekennzeichnet, dass** lineare Führungskörper (34, 36), insbesondere einstufig lineare Führungskörper (34, 36), vorgesehen sind.

3. Hubeinrichtung nach einem der vorhergehenden Ansprüche, **dadurch gekennzeichnet, dass** der erste und zumindest eine weitere Führungskörper (34, 36) jeweils zumindest einen Schlitten (43) aufweisen, die entlang der zumindest einen Führung (38) verfahrbar sind und dass die zumindest eine Antriebseinrichtung (51) an den Schlitten (43) oder den Konsolen (41, 42) der Führungskörper (34, 36) angreift.

4. Hubeinrichtung nach einem der vorhergehenden Ansprüche, **dadurch gekennzeichnet, dass** jeder Führungskörper (34, 36) eine separat ansteuerbare Bremseinrichtung (48, 49) aufweist.

5. Hubeinrichtung nach einem der vorhergehenden Ansprüche, **dadurch gekennzeichnet, dass** jeder Führungskörper (34, 36) eine Wegmesseinrichtung oder einen Lageerkennungssensor (53) umfasst, die vorzugsweise als Bezugssystem die zumindest eine Führung (38) aufweisen.

6. Hubeinrichtung nach einem der vorhergehenden Ansprüche, **dadurch gekennzeichnet, dass** der den Bauzylinder (24) mittels der Konsole (41) aufnehmende Führungskörper (34) synchron mit der Verfahrbewegung des Kolbens (46) mit dem an der weiteren Konsole (42) des weiteren Führungskörpers (36) angeordneten Hauptantrieb (44) ansteuerbar ist.

7. Hubeinrichtung nach Anspruch 4, **dadurch gekennzeichnet, dass** eine Steuerungseinrichtung vorgesehen ist, welche die Bremseinrichtungen (48, 49) und die zumindest eine Antriebseinrichtung (51) der Führungskörper (34, 36) ansteuert, wobei die Antriebseinrichtung (51) nur dann eine Hubbewegung ansteuert, sofern die Bremseinrichtung (48, 49) des ersten Führungskörper (34) oder des zumindest einen weiteren Führungskörpers (36) geschlossen ist.

8. Hubeinrichtung nach einem der vorhergehenden Ansprüche, **dadurch gekennzeichnet, dass** der erste und zumindest eine weitere Führungskörper (34, 36) an einer gemeinsamen Führung (38) verfahrbar sind.

9. Hubeinrichtung nach einem der vorhergehenden Ansprüche, **dadurch gekennzeichnet, dass** der Hauptantrieb (44) eine Hubbewegung des Kolbens (46) über eine Kugelumlaufspindel oder Teleskopkugelumlaufspindel ansteuert.

10. Maschine zur Herstellung von dreidimensionalen Bauteilen (12) durch selektives Verfestigen eines schichtweise aufgebrachten Aufbaumaterials mittels eines auf das Aufbaumaterial einwirkenden Strahles (16),
- mit zumindest einer Prozesskammer (22), welche zumindest eine in einer x-/y-Ebene ausgerichtete Arbeitsfläche (21) aufweist, der ein Bauzylinder (24) auswechselbar zugeordnet ist, in welchem eine Substratplatte (25) mit einem Hauptantrieb (44) verfahrbar angesteuert ist und auf welcher das dreidimensionale Bauteil (12) erzeugt wird,
- mit einer Strahlquelle (15) zur Erzeugung des Strahles (16) und zumindest einer Ablenkeinrichtung (18), durch welche der zumindest eine Strahl (16) auf das zu verfestigende Aufbaumaterial im Bauzylinder (24) geführt und abgelenkt ist,
- mit einer Auftrags- und Nivelliereinrichtung (30), welche oberhalb der Arbeitsfläche (21) zum Aufbringen des Aufbaumaterials relativ zum Bauzylinder (24) verfahrbar ist,
- mit einem ersten Führungskörper (34), welcher eine Konsole (41) verfahrbar ansteuert, die den Bauzylinder (24) aufnimmt und den Bauzylinder (24) in eine Arbeitsebene (20) der Arbeitsfläche (21) in der Prozesskammer (22) verfährt,
**dadurch gekennzeichnet,**
- **dass** eine Hubeinrichtung (31) vorgesehen ist, bei welcher dem ersten Führungskörper (34) zumindest ein weiterer Führungskörper (36) zuordnet ist, die entlang zumindest einer Führung (38) verfahrbar sind,
- **dass** der zumindest eine weitere Führungskörper (36) eine Konsole (42) aufweist, an der der Hauptantrieb (44) vorgesehen ist und
- **dass** der erste und zumindest eine weitere Führungskörper (34, 36) mit zumindest einer Antriebseinrichtung (51) aufeinanderfolgend entlang der zumindest einen Führung (38) verfahrbar sind.

11. Maschine nach Anspruch 10, **dadurch gekennzeichnet, dass** die zumindest eine, insbesondere eine gemeinsame, Führung (38) der Hubeinrichtung (31) vertikal ausgerichtet und an einem Maschinengrundgestell (14) befestigt ist und vorzugsweise die Hubeinrichtung (31) lineare Führungskörper (34, 36) umfasst.

12. Verfahren zur Ansteuerung einer Hubeinrichtung (31) für einen Wechsel oder einen Betrieb eines Bauzylinders (24) in einer Maschine (11) zur Herstellung von dreidimensionalen Bauteilen (12) durch selektives Verfestigen eines schichtweise aufgebrachten Aufbaumaterials mittels eines auf das Aufbaumaterial einwirkenden Strahles (16), **dadurch gekennzeichnet,**
- **dass** die Hubeinrichtung (31) nach einem der Ansprüche 1 bis 9 angesteuert wird, und
- **dass** ein erster Führungskörper (34) und zumindest ein zweiter Führungskörper (36) entlang zumindest einer Führung (28) mit zumindest einer Hubeinrichtung (31) im Wechsel mit einer Hubbewegung gesteuert werden.

13. Verfahren nach Anspruch 12, **dadurch gekennzeichnet, dass** nach jeder Hubbewegung des Führungskörpers (34, 36) eine Schließposition einer Bremseinrichtung (48, 49) des bewegten Führungskörpers (34, 36) zur Sicherung der Hubposition angesteuert wird.

14. Verfahren nach Anspruch 12 oder 13, **dadurch gekennzeichnet, dass** zum Beladen eines Bauzylinders (24) die erste Konsole (41) am ersten Führungskörper (34) in eine Beladeposition (55) verfahren und der Bauzylinder (24) auf die erste Konsole (41) aufgesetzt und darauffolgend der erste Führungskörper (34) mit einer kurzen Hubbewegung angesteuert wird.

15. Verfahren nach einem der Ansprüche 12 bis 14, **dadurch gekennzeichnet, dass** ein Hauptantrieb (44) mit einer Hubbewegung zum Ausfahren des Kolbens (46) angesteuert wird, wobei der Hauptantrieb (44) an einer Konsole (42) des zumindest einen weiteren Führungskörpers (36) angeordnet ist und der Kolben (46) mit einer Substratplatte (25) im Bauzylinder (24) verriegelt wird.

16. Verfahren nach einem der Ansprüche 12 bis 15, **dadurch gekennzeichnet, dass** der erste Führungskörper (34) in Richtung auf die Arbeitsebene (20) einer Arbeitsfläche (21) in einer Prozesskammer (22) verfahren und synchron dazu der Hauptantrieb (44) mit einer Verfahrbewegung des Kolbens (46) ansteuert wird.

17. Verfahren nach einem der Ansprüche 12 bis 16, **dadurch gekennzeichnet, dass** der erste Führungskörper (34) nach dem Überführen des Bauzylinders (24) in die Arbeitsposition stillgesetzt und die Bremseinrichtung (48) verriegelt wird und der zweite Führungskörper (36) nach dem Lösen der Bremseinrichtung (49) mit der Antriebseinrichtung (51) in Richtung auf den ersten Führungskörper (34) verfahren und der Hauptantrieb (44) über eine Ausgleichsbewegung zur Beibehaltung der Kolbenposition im Bauzylinder (24) synchron angesteuert wird.

18. Verfahren nach einem der Ansprüche 12 bis 17, **dadurch gekennzeichnet, dass** die Bremseinrichtungen (48, 49) des ersten und zumindest einen weiteren linearen Führungskörpers (34, 36) betätigt werden und die Substratplatte (25) in eine Startposition (49) im Bauzylinder (24) mit dem Hauptantrieb (44) verfahren wird.

## Claims

1. A lifting apparatus for a building cylinder (24) in a machine (11) for producing a three-dimensional component (12) by selective consolidation of a build-up material applied in layers by means of a beam (16) acting on the build-up material,
- comprising a first bracket (41) which receives the building cylinder (24) replaceably,
- comprising a first guide body (34), which controls the bracket (41) movably and moves the building cylinder (24) into a working plane (20) of a working surface (21) in a process chamber (22),
- comprising a main drive (44), which controls a piston (46), which is couplable to a substrate plate (25) of the building cylinder (24), with a stroke movement,
**characterised in that**
- at least one further guide body (36) is associated with the first guide body (34), both bodies being movable on at least one guide (38),
- the at least one further guide body (36) has a bracket (42) on which the main drive (44) is provided, and
- the first and at least one further guide body (34, 36) having at least one driving apparatus (51) are movable successively along the at least one guide (38).

2. The lifting apparatus according to claim 1, **characterised in that** linear guide bodies (34, 36), in particular single-level linear guide bodies (34, 36), are provided.

3. The lifting apparatus according to either one of the preceding claims, **characterised in that** the first and at least one further guide bodies (34, 36) each have at least one slide (43), which slides are movable along the at least one guide (38), and **in that** the at least one drive apparatus (51) acts on the slides (43) or the brackets (41, 42) of the guide bodies (34, 36).

4. The lifting apparatus according to any one of the preceding claims, **characterised in that** each guide body (34, 36) has a separately controllable braking apparatus (48, 49).

5. The lifting apparatus according to any one of the preceding claims, **characterised in that** each guide body (34, 36) comprises a path-measuring apparatus or a position detection sensor (53) which preferably have the at least one guide (38) as reference system.

6. The lifting apparatus according to any one of the preceding claims, **characterised in that** the guide body (34) receiving the building cylinder (24) by means of the bracket (41) is controllable synchronously with the movement of the piston (46) by means of the main drive (44) arranged on the further bracket (42) of the further guide body (36).

7. The lifting apparatus according to claim 4, **characterised in that** a control apparatus is provided which controls the braking apparatuses (48, 49) and the at least one driving apparatus (51) of the guide bodies (34, 36), wherein the driving apparatus (51) controls a stroke movement only if the braking apparatus (48, 49) of the first guide body (34) or of the at least one further guide body (36) is closed.

8. The lifting apparatus according to any one of the preceding claims, **characterised in that** the first and the at least one further guide body (34, 36) are movable on a common guide (38).

9. The lifting apparatus according to any one of the preceding claims, **characterised in that** the main drive (44) controls a stroke movement of the piston (46) via a ball screw or telescopic ball screw.

10. A machine for producing three-dimensional components (12) by selective consolidation of a build-up material applied in layers by means of a beam (16) acting on the build-up material,
- comprising at least one process chamber (22) which has at least one working surface (21) oriented at least in an x-/y-plane, with which a building cylinder (24) is associated exchangeably, in which building cylinder a substrate plate (25) is controlled movably by means of a main drive (44) and on which the three-dimensional component (12) is produced,
- comprising a beam source (15) for producing the beam (16) and at least one deflection apparatus (18), by which the at least one beam (16) is guided and deflected towards the build-up material to be consolidated in the building cylinder (24),
- comprising an application and levelling apparatus (30), which is movable above the working surface (21) to apply the build-up material relative to the building cylinder (24),
- comprising a first guide body (34), which controls a bracket (41) movably, which bracket receives the building cylinder (24) and moves the building cylinder (24) in a working plane (20) of the working surface (21) in the process chamber (22),
**characterised in that**
- a lifting apparatus (31) is provided, in which the first guide body (34) is associated with at least one further guide body (36), which are movable along at least one guide (38),
- the at least one further guide body (36) comprises a bracket (42), on which the main drive (44) is provided, and
- the first and at least one further guide bodies (34, 36) are movable successively along the at least one guide (38) by means of at least one drive apparatus (51).

11. The machine according to claim 10, **characterised in that** the at least one guide (38), in particular a common guide, of the lifting apparatus (31) is oriented vertically and is fastened to a machine main frame (14), and the lifting apparatus (31) preferably comprises linear guide bodies (34, 36).

12. A method for controlling a lifting apparatus (31) for exchanging or operating a building cylinder (24) in a machine (11) for producing three-dimensional components (12) by selective consolidation of a build-up material applied in layers by means of a beam (16) acting on the build-up material, **characterised in that**
- the lifting apparatus (31) is controlled according to any one of claims 1 to 9, and
- a first guide body (34) and at least one second guide body (36) are controlled along at least one guide (28) by means of at least one lifting apparatus (31) in alternation by means of a stroke movement.

13. The method according to claim 12, **characterised in that**, after each stroke movement of the guide body (34, 36), a closing position of a braking apparatus (48, 49) of the moved guide body (34, 36) is controlled to secure the stroke position.

14. The method according to claim 12 or 13, **characterised in that**, in order to load a building cylinder (24), the first bracket (41) is moved on the first guide body (34) into a loading position (55), and the building cylinder (24) is fitted onto the first bracket (41), and then the first guide body (34) is controlled with a short stroke movement.

15. The method according to any one of claims 12 to 14, **characterised in that** a main drive (44) is controlled by means of a stroke movement to extend the piston (46), wherein the main drive (44) is arranged on a bracket (42) of the at least one further guide body (36) and the piston (46) is locked to a substrate plate (25) in the building cylinder (24).

16. The method according to any one of claims 12 to 15, **characterised in that** the first guide body (34) is moved in the direction of the working plane (20) of a working surface (21) in a process chamber (22) and, synchronously thereto, the main drive (44) is controlled by means of a movement of the piston (46) .

17. The method according to any one of claims 12 to 16, **characterised in that** the first guide body (34) after the transfer of the building cylinder (24) into the working position is stopped and braking apparatus (48) is locked and the second guide body (36) after the release of the braking apparatus (49) is moved by means of the driving apparatus (51) in the direction of the first guide body (34), and the main drive (44) is controlled synchronously by means of a compensation movement in order to maintain the piston position in the building cylinder (24).

18. The method according to any one of claims 12 to 17, **characterised in that** the braking apparatuses (48, 49) of the first and at least one further linear guide body (34, 36) are actuated and the substrate plate (25) is moved into a starting position (49) in the building cylinder (24) by means of the main drive (44).

## Revendications

1. Dispositif de levage pour un cylindre de construction (24) se trouvant dans une machine (11) destinée à fabriquer une pièce tridimensionnelle (12) par solidification sélective d'un matériau constitutif appliqué couche par couche au moyen d'un rayon (16) qui agit sur ledit matériau constitutif, pourvu
- d'une première console (41) qui reçoit de manière échangeable le cylindre de construction (24),
- d'un premier corps de guidage (34) qui est activé de manière à pouvoir faire se déplacer la console (41) et qui déplace le cylindre de construction (24) dans un plan de travail (20) d'une surface de travail (21) à l'intérieur d'une chambre de processus (22),
- d'un entraînement principal (44) qui active un piston (46), qui peut être couplé à une plaque de substrat (25) du cylindre de construction (24), de manière à lui faire effectuer un mouvement de course,
**caractérisé en ce que**
- au premier corps de guidage (34) est affecté au moins un autre corps de guidage (36) qui peut être déplacé le long d'au moins un guide (38),
- ledit au moins un autre corps de guidage (36) présente une console (42) sur laquelle est prévu l'entraînement principal (44) et
- le premier et ledit au moins un autre corps de guidage (34, 36) peuvent être déplacés de manière successive le long dudit au moins un guide (38) grâce à au moins un dispositif d'entraînement (51).

2. Dispositif de levage selon la revendication 1, **caractérisé en ce qu'**il est prévu des corps de guidage linéaires (34, 36), en particulier des corps de guidage linéaires (34, 36) à un seul niveau.

3. Dispositif de levage selon l'une quelconque des revendications précédentes, **caractérisé en ce que** le premier et ledit au moins un autre corps de guidage (34, 36) présentent respectivement au moins un chariot (43) qui peuvent être déplacés le long dudit au moins un guide (38), et **en ce que** ledit au moins un dispositif d'entraînement (51) s'applique contre les chariots (43) ou les consoles (41, 42) des corps de guidage (34, 36).

4. Dispositif de levage selon l'une quelconque des revendications précédentes, **caractérisé en ce que** chaque corps de guidage (34, 36) présente un dispositif de freinage (48, 49) pouvant être activé de manière séparée.

5. Dispositif de levage selon l'une quelconque des revendications précédentes, **caractérisé en ce que** chaque corps de guidage (34, 36) comprend un dispositif de mesure de course ou un capteur de reconnaissance de position (53) lesquels ont de préférence comme système de référence ledit au moins un guide (38).

6. Dispositif de levage selon l'une quelconque des revendications précédentes, **caractérisé en ce que** le corps de guidage (34) qui reçoit le cylindre de construction (24) au moyen de la console (41) peut être activé de manière synchronique au mouvement de déplacement du piston (46) grâce à l'entraînement principal (44) disposé sur ladite autre console (42) dudit autre corps de guidage (36).

7. Dispositif de levage selon la revendication 4, **caractérisé en ce qu'**il est prévu un dispositif de commande qui active les dispositifs de freinage (48, 49) et ledit au moins un dispositif d'entraînement (51) des corps de guidage (34, 36), le dispositif d'entraînement (51) n'activant un mouvement de course uniquement lorsque le dispositif de freinage (48, 49) du premier corps de guidage (34) ou dudit au moins un autre corps de guidage (36) est fermé.

8. Dispositif de levage selon l'une quelconque des revendications précédentes, **caractérisé en ce que** le premier et ledit au moins un autre corps de guidage (34, 36) peuvent être déplacés le long d'un guide commun (38).

9. Dispositif de levage selon l'une quelconque des revendications précédentes, **caractérisé en ce que** l'entraînement principal (44) active un mouvement de course du piston (46) par l'intermédiaire d'une vis à billes ou d'une vis à billes télescopique.

10. Machine destinée à fabriquer des pièces tridimensionnelles (12) par solidification sélective d'un matériau constitutif appliqué couche par couche au moyen d'un rayon (16) qui agit sur ledit matériau constitutif, pourvue
- d'au moins une chambre de processus (22) qui présente au moins une surface de travail (21) orientée dans un plan x/y à laquelle est affecté de manière échangeable un cylindre de construction (24) dans lequel une plaque de substrat (25) est activée par un entraînement principal (44) de manière à pouvoir être déplacée et sur laquelle est fabriquée la pièce tridimensionnelle (12),
- d'une source de rayonnement (15) destinée à générer le rayon (16) et d'au moins un dispositif déflecteur (18) grâce auquel ledit au moins un rayon (16) est guidé et dévié sur le matériau constitutif à solidifier qui se trouve dans le cylindre de construction (24),
- d'un dispositif d'application et de nivellement (30) qui peut être déplacé au-dessus de la surface de travail (21) en vue d'appliquer le matériau constitutif par rapport au cylindre de construction (24),
- d'un premier corps de guidage (34) qui est activé de manière à pouvoir faire se déplacer une console (41) qui reçoit le cylindre de construction (24) et qui déplace le cylindre de construction (24) dans un plan de travail (20) de la surface de travail (21) à l'intérieur de la chambre de processus (22), **caractérisée en ce que**
- il est prévu un dispositif de levage (31) dans lequel au moins un autre corps de guidage (36) est affecté audit premier corps de guidage (34), lesquels peuvent être déplacés le long d'au moins un guide (38),
- ledit au moins un autre corps de guidage (36) présente une console (42) sur laquelle est prévu l'entraînement principal (44) et
- le premier et ledit au moins un autre corps de guidage (34, 36) peuvent être déplacés de manière successive le long dudit au moins un guide (38) grâce à au moins un dispositif d'entraînement (51).

11. Machine selon la revendication 10, **caractérisée en ce que** ledit au moins un guide (38), en particulier ledit au moins un guide commun, du dispositif de levage (31) est orienté de manière verticale et est fixé à un bâti de machine (14), et **en ce que** de préférence le dispositif de levage (31) comprend des corps de guidage linéaires (34, 36).

12. Procédé destiné à activer un dispositif de levage (31) pour échanger ou faire fonctionner un cylindre de construction (24) à l'intérieur d'une machine (11) destinée à fabriquer des pièces tridimensionnelles (12) par solidification sélective d'un matériau constitutif appliqué couche par couche au moyen d'un rayon (16) qui agit sur ledit matériau constitutif, **caractérisé en ce que**
- le dispositif de levage (31) selon l'une quelconque des revendications 1 à 9 est activé, et
- un premier corps de guidage (34) et au moins un deuxième corps de guidage (36) sont activés en alternance grâce à au moins un dispositif de levage (31) de manière à effectuer un mouvement de course le long d'au moins un guide (28).

13. Procédé selon la revendication 12, **caractérisé en ce que**, après chaque mouvement de course du corps de guidage (34, 36), une position de fermeture d'un dispositif de freinage (48, 49) dudit corps de guidage (34, 36) qui vient d'être déplacé est activée en vue de sécuriser la position de course.

14. Procédé selon la revendication 12 ou 13, **caractérisé en ce que**, pour le chargement d'un cylindre de construction (24), la première console (41) située sur le premier corps de guidage (34) est déplacée dans une position de chargement (55) et le cylindre de construction (24) est placé sur ladite première console (41), et que le premier corps de guidage (34) est ensuite activé de manière à effectuer un bref mouvement de course.

15. Procédé selon l'une quelconque des revendications 12 à 14, **caractérisé en ce qu'**un entraînement principal (44) est activé de manière à effectuer un mouvement de course en vue de faire sortir le piston (46), l'entraînement principal (44) étant disposé sur une console (42) dudit au moins un autre corps de guidage (36), et **en ce que** le piston (46) est verrouillé avec une plaque de substrat (25) située dans le cylindre de construction (24).

16. Procédé selon l'une quelconque des revendications 12 à 15, **caractérisé en ce que** le premier corps de guidage (34) est déplacé à l'intérieur d'une chambre de processus (22) en direction du plan de travail (20) d'une surface de travail (21) et **en ce que**, de manière synchronique à cela, l'entraînement principal (44) est activé de manière à faire effectuer au piston (46) un mouvement de déplacement.

17. Procédé selon l'une quelconque des revendications 12 à 16, **caractérisé en ce que** le premier corps de guidage (34) est mis à l'arrêt après le passage du cylindre de construction (24) dans la position de travail, et que le dispositif de freinage (48) est verrouillé, et **en ce que**, après le desserrage du dispositif de freinage (49), le deuxième corps de guidage (36) est déplacé grâce au dispositif d'entraînement (51) en direction du premier corps de guidage (34) et que le dispositif d'entraînement (44) est activé de manière synchronique afin d'effectuer un mouvement de compensation destiné à conserver la position dudit piston dans le cylindre de construction (24).

18. Procédé selon l'une quelconque des revendications 12 à 17, **caractérisé en ce que** les dispositifs de freinage (48, 49) du premier et dudit au moins un autre corps de guidage linéaire (34, 36) sont actionnés et que la plaque de substrat (25) est déplacée grâce à l'entraînement principal (44) dans une position de départ (49) à l'intérieur du cylindre de construction (24).
